# EUROPÄISCHE PATENTSCHRIFT

(11) **EP 0 487 778 B1**
(45) Veröffentlichungstag und Bekanntmachung des Hinweises auf die Patenterteilung: **03.11.1993**
(21) Anmeldenummer: 90122933.6
(22) Anmeldetag: 30.11.1990
(51) Int. Cl.: B29C 47/90

(54) **Schwimmende Kunststoffprofilkalibriervorrichtung**
Floating fixed calibration device for plastic profiles
Dispositif de calibration pour des profilés en matière plastique fixé de manière flottante

(43) Veröffentlichungstag der Anmeldung: 03.06.1992
(73) Patentinhaber: FRIEDRICH THEYSOHN GmbH, D-32547 Bad Oeynhausen (DE)
(72) Erfinder: Topf, Siegfried, A-4050 Traun (AT)
(74) Vertreter: Cohausz & Florack Patentanwälte

(56) Entgegenhaltungen:
- EP-A- 0 207 064
- US-A- 3 378 887

## Beschreibung

Die Erfindung bezieht sich auf eine Kalibriervorrichtung für extrudierte Profile aus Kunststoff, bestehend aus mehreren in Abzugsrichtung des Profils hintereinander angeordneten Kalibriereinheiten, die insbesondere in einer unter Unterdruck stehenden Durchlaufkühlkammer angeordnet sind.

Bei in der Praxis eingesetzten Kalibriervorrichtungen dieser Art (siehe: US-A-3378887) sind die einzelnen Kalibriereinheiten axial zueinander ausgerichtet und fest auf einer Unterkonstruktion montiert. Es hat sich gezeigt, daß selbst bei größstmöglicher Sorgfalt bei der Montage der einzelnen Kalibriereinheiten auf der Unterkonstruktion eine 100%ig exakte Ausrichtung der bis zu 15 Kalibriereinheiten nicht zu erreichen ist. Das bedeutet, daß das durch die Kalibriereinheiten zu führende, schon recht steife Profil erheblichen mechanischen Belastungen ausgesetzt wird. Zur Verhinderung solcher Belastungen und den daraus resultierenden erhöhten Schrumpf- und/oder Oberflächenfehlern hat man die Meßtoleranzen der kunststoffberührenden Kalibrierteile und somit der Kunststoffprofile selbst vergrößert. Diese Maßnahme steht jedoch mit der Forderung, Profile mit höchsten Maßgenauigkeiten zu erhalten, nicht im Einklang.

Der Erfindung liegt die Aufgabe zugrunde, eine Kalibriervorrichtung zu schaffen, mit der Profile höchster Maßgenauigkeit mit geringem Schrumpf erzielt werden können.

Diese Aufgabe wird erfindungsgemäß mit einer Kalibriervorrichtung der eingangs genannten Art dadurch gelöst, daß die Kalibriereinheiten in der Normalebene zur Abzugsrichtung schwimmend auf einer Führung gelagert sind.

Bei der erfindungsgemäßen Kalibriervorrichtung wird das abzuziehende Profil an den einzelnen Kalibriereinheiten nicht zusätzlich wegen einer nicht 100%ig richtigen Ausrichtung der einzelnen Kalibriereinheiten belastet, weil sich die Kalibriereinheiten auf die Lage des abzuziehenden Profils individuell einstellen können. Das bedeutet, daß die vertretbare Belastung des Profils an den einzelnen Kalibriereinheiten voll zur Geometriestützung des Profils von den einzelnen Kalibriereinheiten ausgeschöpft werden kann, indem Kalibriereinheiten mit engen Toleranzen verwendet werden können. Daraus resultieren Profile mit höherer Maßhaltigkeit. Die engen Toleranzen der einzelnen Kalibriereinheiten führen darüber hinaus wegen des verbesserten Kontaktes zwischen jeder der Kaliber und dem Profil zu einer besseren Kühlwirkung. Diese verbesserte Kühlung kann dazu ausgenutzt werden, die Kühlstrecke zu verkürzen und/oder die Abzugsgeschwindigkeiten zu erhöhen. Insgesamt führt der Einsatz der erfindungsgemäßen Kalibriervorrichtung zu maßgenaueren Profilen bei kleineren Anlagen und/oder bei höherer Produktivität, ohne daß der Schrumpfwert des Profils vergrößert wird.

Nach einer Ausgestaltung der Erfindung können die Kalibriereinheiten auf der Führung in Abzugsrichtung verstellbar sein. Dies ist von Vorteil, denn bei materialbedingten Maßschwankungen der Außenabmessungen der Profile können sie durch Veränderung des Abstandes der einzelnen Kalibriereinheiten beeinflußt werden.

Die Führung kann aus Schienen bestehen, auf denen die Kalibriereinheiten nach Art von Schlitten mit Seiten- und Höhenspiel angeordnet sind und die verstellbare Anschläge für die Kalibriereinheiten tragen.

Im folgenden wird die Erfindung anhand einer ein Ausführungsbeispiel darstellenden Zeichnung näher erläutert. Im einzelnen zeigen:

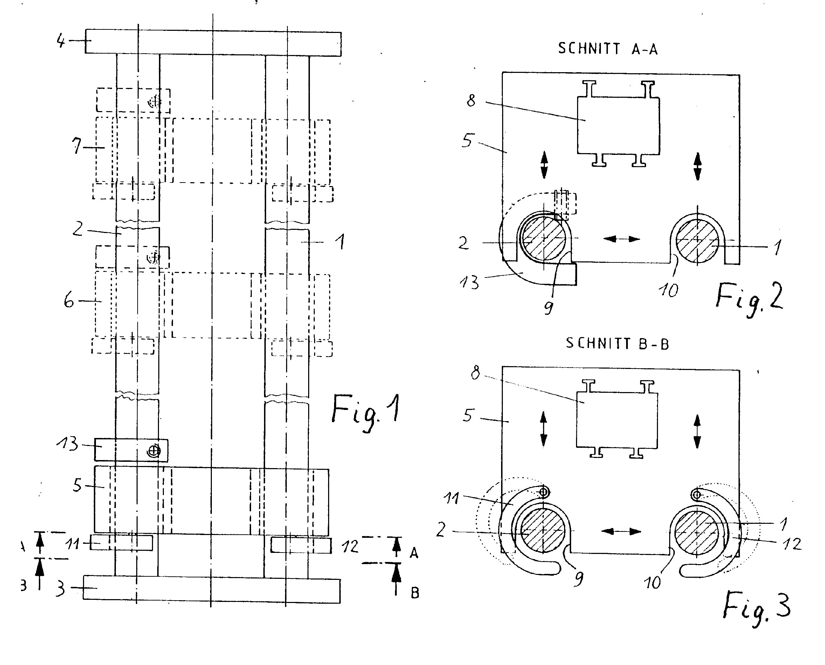

- Figur 1: eine Führung mit einer ausgezeichneten und zwei gestrichelt gezeichneten Kalibriereinheiten einer Kalibriervorrichtung in Draufsicht,
- Figur 2: die Führung mit den Kalibriereinheiten der Figur 1 im Schnitt nach Linie A-A der Figur 1 **und**
- Figur 3: die Führung mit den Kalibriereinheiten gemäß Figur 1 im Schnitt nach der Linie B-B der Figur 1.

Die in der Zeichnung dargestellte Kalibriervorrichtung ist in einer nicht dargestellten, unter Unterdruck und/oder Wasser stehenden Durchlaufkühlkammer angeordnet. In einer solchen Kühlkammer wird das extrudierte Profil mit Kühlflüssigkeit allseitig besprüht, so daß es bis zum Ende des Durchlaufs ganz steif wird. Die bei diesem Durchlauf passierten Kalibriereinheiten sorgen dafür, daß das Profil mit geringsten Maßtoleranzen die Kühlkammer verläßt.

Die in der Zeichnung dargestellte Kalibriervorrichtung weist zwei parallele Führungsschienen 1,2 auf, die von an den Enden angebrachten Querhäuptern 3,4 gehalten sind. Auf diesen Führungsschienen 1,2 sind drei Kalibriereinheiten 5,6,7 mit Abstand voneinander in Abzugsrichtung gelagert. Der Aufbau der Kalibriereinheiten 5 bis 7 ist gleich, so daß die weitere Beschreibung auf die ausgezeichnet dargestellte Kalibriereinheit 5 beschränkt werden kann.

Die einzelnen Kalibriereinheiten 5 bis 7 können mit separaten Vakuum- und Temperieranschlüssen ausgerüstet sein.

Die Kalibriereinheit 5 weist eine Durchtrittsöffnung 8 für das zu extrudierende Profil auf. An der Unterseite weist es zwei torbogenartige Ausnehmungen 9,10 auf, in denen sich die Führungsschienen 1,2 befinden. Die Führungsschienen 1,2 werden in den Ausnehmungen 9,10 mittels von der Kalibriereinheit 5 getragenen verschwenkbaren Klauen 11,12 gehalten. Die Führungsschienen 1,2 haben von den Ausnehmungen 9,10 und den Klauen 11,12 einen allseitigen Abstand, so daß sich die Kalibriereinheit 5 in allen Richtungen der Normalebene zur Abzugsrichtung bewegen kann. Die Kalibriereinheit 5 ist also schwimmend auf den Führungsschienen 1,2 gelagert. Die Position der Kalibriereinheit 5 in Abzugsrichtung wird durch einen Anschlag 13 bestimmt, der auf den Schienen 2 stufenlos festklemmbar ist.

Bei der Kalibriervorrichtung werden die einzelnen Kalibriereinheiten 5 bis 7 lediglich auf die Führungsschienen 1 aufgesetzt und durch die Klauen 11,12 gegen Abheben gesichert. Aufgrund des allseitigen Spiels an den Führungsschienen 1,2 können sich die einzelnen Kalibriereinheiten 5 bis 7 auf das durchlaufende Profil seitlich einstellen, so daß das Profil an den einzelnen Kalibriereinheiten 5 bis 7 keine es verlagernde Seitenkraft erfährt. Die Belastung des Profils ist deshalb an den einzelnen Kalibriereinheiten 5 bis 7 im Vergleich zu der Belastung bei einer bekannten Kalibriervorrichtung vermindert.

## Patentansprüche

1. Kalibriervorrichtung für extrudierte Profile aus Kunststoff, bestehend aus mehreren in Abzugsrichtung des Profils hintereinander angeordneten Kalibriereinheiten (5 bis 7), die insbesondere in einer unter Unterdruck und/oder Wasser stehenden Durchlaufkühlkammer angeordnet sind,
**dadurch gekennzeichnet**, daß die Kalibriereinheiten (5 bis 7) in der Normalebene zur Abzugsrichtung schwimmend auf einer Führung (1,2) gelagert sind.

2. Kalibriervorrichtung nach Anspruch 1,
**dadurch gekennzeichnet**, daß die Kalibriereinheiten (5 bis 7) auf der Führung (1,2) in Abzugsrichtung verstellbar sind.

3. Kalibriervorrichtung nach Anspruch 1 oder 2,
**dadurch gekennzeichnet**, daß die Führung (1,2) aus Schienen besteht, auf denen die Kalibriereinheiten (5 bis 7) nach Art von Schlitten mit Seiten- und Höhenspiel angeordnet sind und die verstellbare Anschlage (13) für die Kalibriereinheiten (5 bis 7) tragen.

## Claims

1. A calibrating device for extruded plastics sections, comprising a number of calibrating units (5 to 7) disposed in series in the drawing-off direction, more particularly in a continuous cooling chamber under negative pressure and/or water, characterized in that the calibrated units (5 to 7) are mounted on a guide (1, 2) floatably in the plane orthogonal to the drawing-off direction.

2. A calibrating device according to claim 1, characterized in that the calibrating units (5 to 7) can be adjusted on the guide (1, 2) in the drawing-off direction.

3. A calibrating device according to claims 1 or 2, characterized in that the guide (1, 2) comprises rails on which the calibrating units (5 to 7) are disposed after the fashion of carriages with lateral and vertical clearance and which bear the adjustable stops (13) for the calibrating units (5 to 7).

## Revendications

1. Dispositif de calibrage pour profilés extrudés en matière synthétique, constitué de plusieurs unités de calibrage (5 à 7) disposées les unes derrière les autres en direction d'extraction du profilé, qui sont disposées en particulier dans une chambre de passage de refroidissement se trouvant sous dépression et/ou sous l'eau,
caractérisé en ce que les unités de calibrage (5 à 7) sont montées flottantes sur un guidage (1, 2) dans le plan normal à la direction d'extraction.

2. Dispositif de calibrage selon la revendication 1,
caractérisé en ce que les unités de calibrage (5 à 7) sont ajustables en direction d'extraction sur le guidage (1, 2).

3. Dispositif de calibrage selon la revendication 1 ou 2,
caractérisé en ce que le guidage (1, 2) est constitué de rails sur lesquels les unités de calibrage (5 à 7) sont montées à jeux latéraux et en hauteur à la manière de chariots et qui portent des butées ajustables (13) pour les unités de calibrage (5 à 7).
